# EUROPÄISCHE PATENTANMELDUNG

(11) **EP 3 012 628 A1**
(43) Veröffentlichungstag der Anmeldung: **27.04.2016**
(21) Anmeldenummer: 15190493.5
(22) Anmeldetag: 20.10.2015
(51) Int. Cl.: G01N 30/32, H01J 49/04

(54) **DRUCKABFALLVORRICHTUNG**

(30) Priorität: 21.10.2014 DE 102014221370
(71) Anmelder: Bayer Technology Services GmbH, 51368 Leverkusen (DE); Krohne Messtechnik GmbH, 47058 Duisburg (DE)
(72) Erfinder: RAMÍREZ WONG, Régulo Miquel, 80799 München (DE); MÜLLER, Jörg, Prof. Dr.-Ing., 21244 Buchholz (DE)
(74) Vertreter: BIP Patents

(57) **Zusammenfassung**

Gegenstand der Erfindung ist eine Druckabfallvorrichtung wie sie für Gaschromatographen oder Massenspektrometer eingesetzt werden kann. Diese enthält eine eben ausgebildete Grundplatte(1) und eine Deckplatte (2) sowie eine Gaseintrittsöffnung(3) und eine Gasaustrittsöffnung(4), die über eine Kapillarfurche (5) verbunden sind, wobei die Kapillarfurche als Ätzfurche oder Pressfurche in der Grundplatte ausgebildet ist, und durch die Deckplatte geschlossen ist, und wobei mehrere Druckabfallvorrichtungen zu einem Modul verbunden sein können.

## Beschreibung

Die Erfindung betrifft eine Druckabfallvorrichtung wie sie insbesondere als Bauelement für Gaschromatographen oder Massenspektrometer aber auch als Bauteil eines Reduzierventils eingesetzt werden kann.

Für die chemische Analyse werden Techniken wie die Massenspektrometrie oder die Gaschromatographie verwendet, bei denen die Bestandteile einer Probe nach unterschiedlichen physikalischen Prinzipien getrennt werden. So werden in der Gaschromatographie die Bestandteile der Probe räumlich getrennt, basierend auf der Diffussionszeit der Moleküle durch eine Trennsäule. In der Massenspektrometrie werden einzelne Moleküle ionisiert und nach ihrem Masse- zu-Ladungsverhältnis zeitlich getrennt. In beiden Fällen spielt das Injektionssystem eine wichtige Rolle, da der darin herrschende Druck die Messung und die Auslegung der Messgeräte wesentlich beeinflusst.

Die Proben befinden sich in der Regel bei Atmosphären- oder Überdruck. Für den Betrieb eines Massenspektrometers ist ein sehr viel geringerer Druck nötig. Viele Massenspektrometer arbeiten bei Drucken kleiner als 0,1 Pa, so dass eine Druckabfallstufe erforderlich ist. Diese wird üblicherweise durch Kapillaren definierter Länge und konstanter Querschnittsgröße realisiert, die durch ihren Fließwiderstand den Druck reduzieren. Die Länge solcher Kapillaren kann bis zu einigen Metern betragen und die resultierende Laufzeit der Probe kann dadurch einige Minuten betragen. Alternativ werden Massenflussregler eingesetzt, mit denen man den Druck einstellen und regeln kann. Durch diese Vorrichtungen werden der Aufwand an der Peripherie des Injektionssystems aber auch das Totvolumen und die Ansprechzeit signifikant erhöht. Im Falle flüssiger Proben ist es zusätzlich nötig, diese zunächst in die Dampfphase zu bringen in diesem Fall ist es besonders wichtig eine Rekondensation des Dampfes in der Druckminderungsstrecke zu verhindern. Die genannten voluminösen ausgedehnten Injektionssysteme müssen daher mit aufwändigen Methoden beheizt werden, wozu man zum Beispiel Heizmäander verwenden kann. Diese Maßnahmen erhöhen wesentlich den operativen Aufwand, den Energieverbrauch und das Volumen der Injektionssysteme und erfordern eine sehr voluminöse thermische Abschirmung.

Vor dem Hintergrund dieses Standes der Technik haben sich die Erfinder die Aufgabe gestellt, eine miniaturisierte Druckabfallvorrichtung zu schaffen, die für die Druckreduzierung auf sehr geringem Raum geeignet ist, in die Verdampfereinheit insbesondere eines Massenspektrometers oder eines Gaschromatographen integriert werden kann, in der Herstellung kostengünstig ist, leicht ausgetauscht werden kann und unter Arbeitsbedingungen eine direkt Kondensation durch Unterschreitung des Dampfdrucks der Probe vermeidet.

Die Lösung dieser Aufgabe gelingt durch Bereitstellung einer Druckabfallvorrichtung enthaltend eine eben ausgebildete Grundplatte und eine Deckplatte, sowie eine Gaseintrittsöffnung und einen Gasaustritt, die über eine Kapillarfurche verbunden sind, wobei die Kapillarfurche als Ätzfurche oder Pressfurche in der Grundplatte ausgebildet ist, und durch die Deckplatte bedeckt ist.

Das Aufbringen der Deckplatte auf der Grundplatte verschließt die Kapillarfurche zu einem Kapillarkanal.

In einer allgemeinen Ausführungsform schlägt die Erfindung vor, als Druckabfallvorrichtung anstelle einer Kapillaren eine Kapillarfurche für die Verbindung einer Öffnung für den Gaseinlass mit einer Öffnung für den Gasaustritt zu verwenden, die in eine Grundplatte eingeätzt ist, und mit einer Deckplatte bedeckt ist.

Zur Herstellung einer derartigen Druckabfallvorrichtung geht der Fachmann zunächst von der Grundplatte aus. Die Grundplatte ist bevorzugt aus einem anisotrop ätzbaren Material. Besonders geeignet sind hier Silizium aber auch andere Halbleitermaterialien. Derartige Materialien sind dem Fachmann für Mikrosystemtechnik bekannt. Die Abmessung der Grundplatte kann beliebig gewählt werden. Sie richtet sich in erster Linie nach den Gegebenheiten des Geräts, an das die Druckabfallvorrichtung anzuschließen ist.

Erfindungsgemäße notwendig ist lediglich eine ebene Fläche, in die die Kapillarfurche eingebracht werden kann. Dies geschieht vorzugsweise durch Ätzen. Es ist aber auch möglich, die Furche in thermoplastische Materialien einzuprägen.

Auch bei der Bestimmung der Geometrie der Kapillarfurche hat der Fachmann Freiheiten. Die Furche kann spiralförmig, mäanderförmig, in Form einer Sinuskurve oder in anderer geometrischer Weise ausgeführt werden. Voraussetzung ist lediglich, dass sie eine Öffnung für den Gaseinlass und für den Gasaustritt verbindet. Dabei können diese Öffnungen einzelnen oder beide in der Grundplatte ausgeführt sein oder eine oder beide sich in der Deckplatte befinden.

Für Länge und Querschnittgröße der Kapillarfurche gelten die folgenden Zusammenhänge: der Druckabfall ist um umso größer je länger die Furche ist und umso geringer, je größer der Querschnitt ist, wobei beide Zusammenhänge nicht linear sind. Die genau benötigte Länge und der genau benötigte Querschnittsgröße für ein bestimmtes System richten sich auch nach Menge und Art des Gases das in der Druckabfallvorrichtung behandelt werden soll.

Als grobe Anhaltspunkte können die folgenden Werte gelten: für ein Massenspektrometer, das bei einem Druck kleiner 0,1 Pa arbeitet, haben sich Längen für die jeweiligen Stufen von etwa 5 mm bis etwa 50 mm bei Querschnittsgröße von etwa 10 µm bis etwa 200 µm bewährt.

Für einen Gaschromatographen, der bei einem Druck kleiner 10 Pa arbeitet, haben sich Längen von etwa 5 Millimeter bis etwa 20 Millimeter bei Querschnittsgrößen von etwa 20 µm bis etwa 60 µm für die Eingangsstufe und 3 mm bis 10 mm bei Querschnittsgrößen von 100 µm bis 200 µm bewährt.

Die Kapillarfurche kann einen konstanten Querschnitt oder einen zunehmenden Querschnitt aufweisen. Vorzugsweise weist aber die Kapillarfurche einen konstanten, bzw. sich in Stufen vom Eingang zum Ausgang verbreiterten Querschnitt auf.

Die Querschnittsform der Kapillarfurche ist beliebig, üblicherweise für eine einfache Herstellung durch Ätzen halbrund oder viereckig.

Zur Abdeckung der in die Grundplatte eingeätzten oder eingeprägten Kapillarfurchen wird eine Deckplatte verwendet. Geeignete Deckplatten sind beispielsweise aus Gläsern insbesondere aus Bor - Silikat-Glas. Auch die Abmessung der Deckplatte kann der Fachmann in weiten Grenzen wählen oder verändern und somit an die Gegebenheiten des anzuschließenden Messegeräts anpassen.

Auch die Dicke von Grund und Deckplatte kann der Fachmann frei wählen. In der Praxis haben sich Dicken zwischen 200 µm und 500 µm bewährt.

Die Ätzverfahren zur Herstellung der Grundplatte sind dem Fachmann für Mikrosystemtechnik bekannt. Üblicherweise geht man wie folgt vor: die Grundplatte also zum Beispiel ein Körper aus Silizium wird plan poliert und dann, definiert durch eine photolithographisch realisierte Maskierung in einem nasschemischen, i.a. isotropen, vorzugsweise zur Gewährleistung einer höheren Strukturtreue einem anisotropen plasmagestützten Trocken-Ätzverfahren, die Furchen in Form eines Halbkreises, einer V-Struktur oder mit rechteckigem Querschnitt eingeätzt.

Auf die Grundplatte wird die Deckplatte aufgebracht. Hierzu eignet sich insbesondere das aus der Mikrosystemtechnik bekannte Verfahren des anodischen Bondens. Dazu werden Gas- und Siliziumsubstrat aufeinander gepresst und bei Temperaturen zwischen 200° C und 400° C und einer angelegten elektrischen Gleichspannung von einigen 100 V mit dem negativen Pol auf der Glasseite chemisch verbunden, ausgelöst durch das Wandern von Natriumionen im Glas von der Grenzfläche zum Silizium weg und der chemischen Bindung des zurückbleibenden Sauerstoffs mit dem Silizium.

Um den Anwendungsbereich der Druckabfallvorrichtung zu erweitern, schlägt die Erfindung vor, dies durch Regelung der Temperatur zu bewerkstelligen. Da der Druck im System bei konstanten Volumen proportional zur Temperatur ansteigt und die Viskosität des Gases und damit der Strömungswiderstand mit der Quadratwurzel der Gas-Temperatur, fällt die am Ausgang zur Verfügung stehende Gasmenge und damit ihr Druck überproportional mit der Temperatur. Nach einer besonders bevorzugten Ausführungsform der Erfindung ist es daher vorgesehen, wegen der hohen Wärmeleitfähigkeit von Halbleitern vorzugsweise auf der Seite der Grundplatte ggf. auch auf der Seite der Deckplatte ein Heizelement vorzusehen. Als Heizelemente eignen sich elektrisch oder durch eine Heizflüssigkeit beheizte Folien oder Platten, die die Wärme durch Wärmeleitung übertragen. Geeignet sind aber auch Strahlungsquellen wie zum Beispiel Infrarotlampen. Vorzugsweise ist die Heizfläche regelbar, so dass eine bestimmte Temperatur oder ein bestimmter Temperaturbereich eingestellt werden kann.

Die erfindungsgemäße Druckabfallvorrichtung hat einen Gaseinlass und einen Gasaustritt. Die Gaseinlassöffnung wie die Gasaustrittsöffnung können vom Fachmann in weiten Grenzen an die Bedürfnisse der anzuschließenden Geräte angepasst werden. Verwendet werden können zum Beispiel Anschlüsse wie sie bei den Gaschromatographie oder Massenspektrometer nach dem Stand der Technik für den Anschluss der dort verwendeten Kapillaren eingesetzt werden. Die Einlassöffnung und Gasaustrittsöffnung können auf der Seite der Grundplatte oder auf der Seite der Deckplatte angebracht werden. Bevorzugt ist es jedoch beide Öffnungen auf der Seite der Grundplatte oder der Deckplatte anzubringen. Es kann aber auch beispielsweise die Gaseintrittsöffnung auf der Seite der Grundplatte die Gasaustrittsöffnung auf der Seite der Deckplatte oder umgekehrt ausgebildet werden.
Nach einer bevorzugten Ausführungsform der Erfindung ist die Gasaustrittsöffnung (4) als Kavität ausgebildet. Die Kavität kann dazu dienen ein Verbindungs- oder Anschlusselement eines Massenspektrometers oder aber auch den Einlass der Trennsäule eines Gaschromatographen aufzunehmen. Dabei ist es ein Vorteil der erfindungsgemäßen Druckabfallvorrichtung, dass die Geometrie wegen der Herstellung durch das Ätzverfahren besonders leicht angepasst werden kann.

Nach einer weiteren bevorzugten Ausführungsform der Erfindung erweitert sich die Kapillarfurche vor der Kavität um einen sichereren Anschluss zu gewährleisten.

Nach einer weiteren Ausführungsform der Erfindung kann die Grundplatte auf der Vorderseite und auf der Rückseite durch Ätzen mit einer Kapillarfurche versehen werden und auf beiden Seiten mit einer Deckplatte abgedeckt werden, wobei die beiden Furchen durch eine Bohrung verbunden sind.

Wegen der Erfordernis, den Druck um Größenordnungen zu verringern, ist es vorteilhaft, statt einer Kapillarfurche mehrere mit zunehmenden Querschnitt in Reihe zu schalten und so den steilen Druckabfall am Ende jeder der Einzelstrukturen in der nachfolgenden auf längere Strecken auszudehnen und so eine hohe Genauigkeit bezüglich des gewünschten Ausgangsdrucks zu gewährleisten. Hierfür können mehrere Druckabfallvorrichtungen mit konstanten Querschnitt und mit aufeinander abgestimmten Gaseinlass und Gasaustritt in Serie in einem Druckabfallmodul miteinander verbunden werden.

Um den Aufbau insbesondere bei bekannten Druck- und Flussverhältnissen zu vereinfachen und Totvolumina vollständig zu vermeiden, können die Kapillarfurchen mit unterschiedlichen Querschnitten auch direkt auf einem Substrat hergestellt werden. Dabei steigt die Querschnittsgröße der Furchen vorzugsweise zum Gasaustritt hin.

Nach einer weiteren bevorzugten Ausführungsform der Erfindung werden mehrere Druckabfallvorrichtungen zu einem Modul verbunden.

Erfindungsgemäße Module können aus den Druckabfallvorrichtungen durch Aufeinanderstapeln von Grundplatte, Deckplatte, Grundplatte, Deckplatte und so weiter hergestellt werden, oder durch Aufeinanderstapeln mehrerer Grundplatten, abschließend gefolgt von einer Deckplatte.

Nach einer bevorzugten Ausführungsform besteht ein Modul entweder aus 2 bis 10 Paaren Grundplatte-Deckplatte oder aus mindestens einer Deckplatte und bis zu 10 Grundplatten und ist der Weise aufgebaut sein kann, dass die Platten sandwichartig übereinander geschichtet sind und die Kapillarfurchen einen durchgängigen Kanal von der Einlassöffnung der ersten Platte bis zur Austrittsöffnung der letzten Platte formen.

Bevorzugt enthalten Module aus Druckabfallvorrichtungen nur eine Kavität an der Gasaustrittsöffnung des Moduls, jedoch möglichst keine Kavitäten, bestenfalls eine Verbreiterung des Kapillarkanals am Gasaustritt jeder einzelnen Druckabfallvorrichtung. So kann durch die Kombination mehrerer Druckabfalleinrichtungen mit vom Eingang zum Ausgang zunehmenden Querschnitten in einfacher Weise ein System hergestellt werden, das die Einstellung eines Druckabfalls unter den verschiedensten Verfahrensbedingungen ermöglicht. Üblicherweise werden in einem Modul 2-5 Druckabfallvorrichtungen miteinander kombiniert. Die Verbindung von Gasaustritt mit dem Gaseinlass des nächsten Moduls kann durch mechanische Verbindungsverfahren, etwa Verschrauben oder Verkleben geschehen. Innerhalb eines Moduls ist es bevorzugt, die Vorrichtungen übereinander zu stapeln. Bei passgenau übereinander liegenden Ein- und Austrittsöffnungen kann dann zum Verbinden der Vorrichtungen auch das anodische Bonden eingesetzt werden. Nach einer bevorzugten Ausführungsform sind die Vorrichtungen so aufeinander gestapelt, dass der Gasauslass einer Vorrichtung mit dem Gaseinlass der nächsten Vorrichtung überlappt.

Bei der Herstellung der Druckabfallvorrichtung und / oder der Module wird der Fachmann darauf achten, Totvolumina möglichst zu vermeiden.

Ein weiterer Gegenstand der Erfindung ist ein Gaschromatograph, enthaltend mindestens eine erfindungsgemäße Druckabfallvorrichtung. Die Druckabfallvorrichtung befindet sich dabei an der Stelle an der ansonsten die zum Druckabfall benötigten Kapillaren eingebaut sind, also zwischen dem Probeneinlass und der Trennsäule. Bevorzugt ist sie bündig mit dem Einlass der Trennsäule verbunden. Nach einer besonders bevorzugten Ausführungsform ist sie mit einer Heizplatte verbunden so dass sie temperiert werden kann. Nach einer weiteren bevorzugten Ausführungsform ist so eng mit der Trennsäule verbunden, dass sie bei der Temperatur der Trennsäule betrieben werden kann und dass eine getrennte Heizung der Druckabfallvorrichtung nicht benötigt wird.

Ein weiterer Gegenstand der Erfindung ist ein Massenspektrometer enthalten eine oder mehrere erfindungsgemäße Druckabfallvorrichtungen. Auch hier ist sie zwischen der Probeneinlasskammer und dem eigentlichen Massenspektrometer eingebaut bzw. direkt in das System integriert.

Die Vorteile der erfindungsgemäßen Druckabfallvorrichtung liegen darin, dass durch die kleine thermische Masse und das geringe Volumen die Druckabfallstufe nahezu ohne zusätzlichen Energiebedarf operieren kann. Die auf etwa Verdampfer Temperatur liegende Druckabfallstufe ermöglicht die Reduzierung des Probendruckes bei dieser Temperatur. Der Probendruck lässt sich in der Druckabfallstufe unter den Dampfdruck des Probengases bei Raumtemperatur reduzieren, sodass, wenn die Probe den geheizten Bereich des Verdampfers verlässt, keine Kondensation mehr auftritt. Gleichzeitig kann der Ausgangsdruck der Probe im Druckbereich des nachfolgenden Analysesystems, z. B. eines Massenspektrometers oder einer Gaschromatographie eingestellt werden.

Die kostengünstige Herstellung der Druckabfallvorrichtung und die einfache Integration in das Probenentnahmesystem ermöglichen einen ökonomischen Austausch im Fall einer Verstopfung oder des Versagens des Systems. Die Mikro-Druckabfalleinheit kann auf einfache Weise auch an stark unterschiedliche Probenflüssigkeiten und erforderliche Druckdifferenzen und Flüsse adaptiert werden.

Ein weiterer Gegenstand der Erfindung ist eine Gaschromatographen- Massen- Spektrometer (GC MS) Kopplung enthaltend 1 bis 2 Druckabfallvorrichtung/en, nämlich eine optionale Druckabfallvorrichtung zwischen Probeneinlass und Gaschromatograph und eine Druckabfallvorrichtung zwischen dem Ausgang des Gaschromatographen und dem Massenspektrometer.

Ein weiterer Gegenstand der Erfindung ist ein Reduzierventil enthaltend als Bauteil im Gasstrom eine oder mehrere erfindungsgemäße Druckabfallvorrichtungen.

Die Erfindung wird anhand der Zeichnungen weiter erläutert.

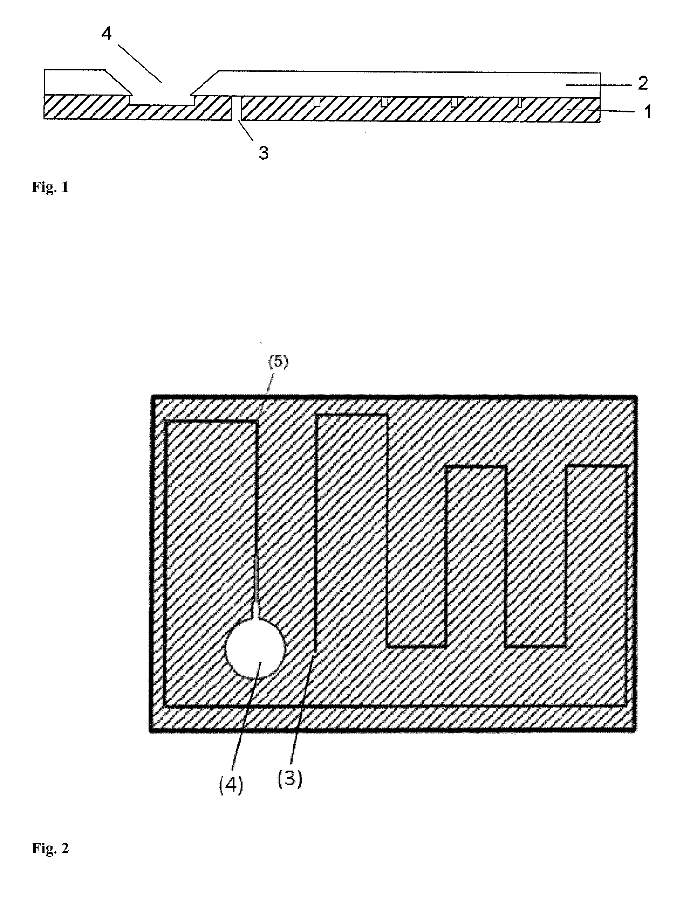

In der Figur 1 bedeutet (1) die Grundplatte. Auf der Grundplatte ist die Deckplatte (2) angebracht. Die Grundplatte enthält die Gaseintrittsöffnung (3), die Deckplatte enthält die Gasaustrittsöffnung (4).

In Figur 2 ist die Kapillarfurche dargestellt. In diesem Fall ist eine mäanderförmige Kapillarfurche ausgewählt.

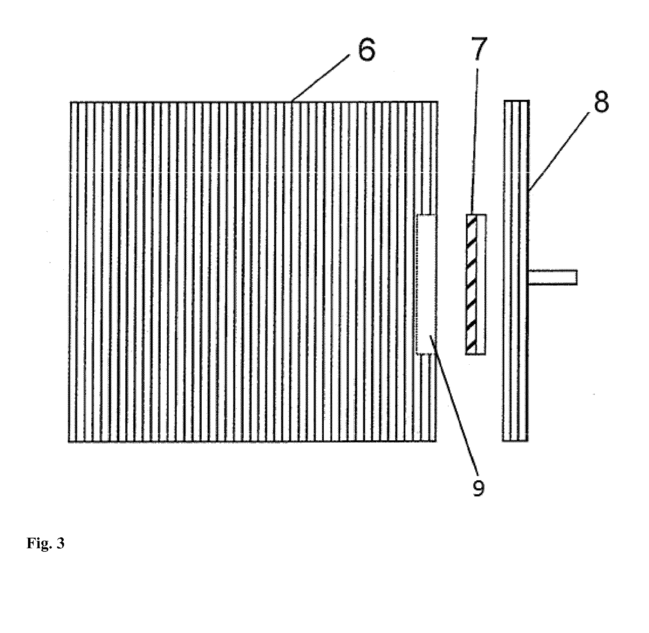

Figur 3 zeigt das Probenentnahmesystem eines Massenspektrometers (6) mit einer Vertiefung zur Aufnahme einer erfindungsgemäßen Druckabfallvorrichtung (9) mit passenden Ein- und Ausgangsöffnung (nicht dargestellt). In dieser Vertiefung wird als Bauteil die erfindungsgemäße Druck Abfallvorrichtung (7) eingesetzt, so dass Ein- und Ausgangsöffnungen des Probennahmesystems mit dem Gaseinlass und Gasaustritt der Druckabfallvorrichtung verbunden sind und mit einem Deckel (8) befestigt.
Üblicherweise wird die Befestigung mit Hilfe einer lokal perforierten, vorzugweise gut wärmeleitenden Folien- oder einer O-Ring-Dichtung (nicht dargestellt) und. Weiterhin weist der Deckel (8) ein integriertes Heizelement auf.

## Patentansprüche

1. Druckabfallvorrichtung enthaltend eine eben ausgebildete Grundplatte und eine Deckplatte, sowie eine Gaseintrittsöffnung und einen Gasaustritt, die über eine Kapillarfurche verbunden sind, wobei die Kapillarfurche als Ätzfurche oder Pressfurche in der Grundplatte ausgebildet ist, und durch die Deckplatte bedeckt ist.

2. Druckabfallvorrichtung nach Anspruch 1, **dadurch gekennzeichnet dass** als weitere Platte auf der Seite der Grundplatte oder auf der Seite der Deckplatte ein Heizelement anliegend verbunden vorliegt.

3. Druckabfall Vorrichtung nach einem der Ansprüche 1 oder 2 **dadurch gekennzeichnet dass** die Grundplatte aus einem anisotrop ätzbaren Material, insbesondere aus Silizium oder einem Halbleitermaterial besteht.

4. Druckabfallvorrichtung nach einem der Ansprüche 1 bis 3 **dadurch gekennzeichnet dass** die Deckplatte aus Glas insbesondere aus einem Bor-Silikat Glas besteht.

5. Druckabfallvorrichtung nach einem der Ansprüche 1 bis 4 **dadurch gekennzeichnet dass** der Gaseintrittsöffnung und die Gasaustrittsöffnung beide auf der gleichen oder auf der gegenseitigen Ebene der Grundplatte ausgebildet sind.

6. Druckabfallvorrichtung nach einem der Ansprüche 1 bis 5 **dadurch gekennzeichnet dass** sich der Gaseinlass auf der freien Seite der Silizium Platte und der Gasauslass auf der freien Seite der Glasplatte ausgebildet sind.

7. Modul aus Druckabfallvorrichtungen, **dadurch gekennzeichnet dass** es aus mindestens 2 bis maximal 10 in Serie verbundenen Druckabfallvorrichtungen nach einem der Ansprüche 1 bis 6 ausgebildet ist, wobei das Modul entweder aus 2 bis 10 Paaren Grundplatte-Deckplatte oder aus mindestens einer Deckplatte und bis zu 10 Grundplatten in der Weise aufgebaut sein kann, dass die Platten sandwichartig übereinander geschichtet sind und die Kapillarfurchen einen durchgängigen Kanal von der Einlassöffnung der ersten Platte bis zur Austrittsöffnung der letzten Platte formen.

8. Gaschromatograph enthaltend mindestens eine Druckabfallvorrichtung nach einem der Ansprüche 1 bis 7.

9. Massenspektrometer enthaltend mindestens eine Druckabfallvorrichtung nach einem der Ansprüche 1 bis 7.

10. Reduzierventil, enthaltend mindestens einen Druckabfallvorrichtung nach einem der Ansprüchen 1 bis 7.
